(19) Europäisches Patentamt
European Patent Office
Office européen des brevets

(11) **EP 4 726 208 A1**

(12) **EUROPEAN PATENT APPLICATION**
published in accordance with Art. 153(4) EPC

(43) Date of publication:
**15.04.2026 Bulletin 2026/16**

(21) Application number: **23940723.2**

(22) Date of filing: **08.06.2023**

(51) International Patent Classification (IPC):
**F03D 17/00** (2016.01)

(52) Cooperative Patent Classification (CPC):
**F03D 17/00**

(86) International application number:
**PCT/JP2023/021381**

(87) International publication number:
**WO 2024/252625 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Synspective Inc.**
**Tokyo, 135-0022 (JP)**

(72) Inventor: **UDA, Takushi**
**Tokyo 135-0022 (JP)**

(74) Representative: **Cabinet Chaillot**
**16/20, avenue de l'Agent Sarre**
**B.P. 74**
**92703 Colombes Cedex (FR)**

(54) **WAKE EVALUATION DEVICE AND WAKE EVALUATION METHOD**

(57)      A wake evaluation apparatus includes: a wake region detection unit 13 that analyzes an SAR image observed using a satellite's synthetic aperture radar using a machine learning model and detects one or more wake regions included in the SAR image; a wake position specifying unit 14 that specifies the position information of the wake region detected by the wake region detection unit 13 based on geographic information of the observation area measured by the satellite; and a wake region association unit 15 that associates the wake region with a wind power plant at a corresponding location based on the specified position information of the wake region and position information of the wind power plant specified in advance, and is configured to be able to evaluate wakes generated around a wind power plant without providing a transect by using a novel analysis method that is executed by applying the SAR image to the machine learning model.

Fig. 2

## Description

Technical Field

The present invention relates to a wake evaluation apparatus and a wake evaluation method, and more particularly, to an apparatus and method suitable for evaluating wakes generated around a wind power plant using observation data measured by a synthetic aperture radar.

Background Art

In wind power generation, which is one type of power generation system, electricity is generated by converting the kinetic energy of wind into rotational energy through a turbine to rotate a generator. Wind power generation includes onshore power generation and offshore power generation.

In Japan, many of the wind power generation facilities that are currently supplied commercially are installed in coastal or mountainous areas where wind conditions are favorable. On the other hand, the wind is generally stronger and more steadily offshore than on land. In addition, since the installation site is away from residential areas, there are fewer noise and aesthetic issues than on land. For this reason, the development of offshore wind power generation is actively progressing on a global scale.

In offshore wind power generation, a phenomenon called a wake occurs. This is a phenomenon in which the wind speed decreases behind a turbine. This phenomenon causes a wake generated in one turbine to increase wind loads on surrounding turbines or reduce power generation. In addition, in large-scale wind farm including a plurality of turbine groups, there is concern that these wakes may interfere with each other to form a complex flow field and this may have a greater impact on wind farm on the downwind side. For this reason, it is important to observe the wake generation status.

LiDAR is one method for directly measuring the effects of wakes, but its observation range is narrow, making it difficult to capture the full extent of the wake, which can sometimes exceed 50 km. On the other hand, NPL 1 shows results evaluating the influence range of wakes using SAR (Synthetic aperture radar), which is one of the Earth observation technologies from space. The SAR observes radar reflections from the sea surface, and since there is a correlation between the radar sea surface reflection intensity seen from the satellite and the wind speed above the sea surface, it is possible to evaluate the wake of a wind farm based on the sea surface reflection intensity observed by the SAR.

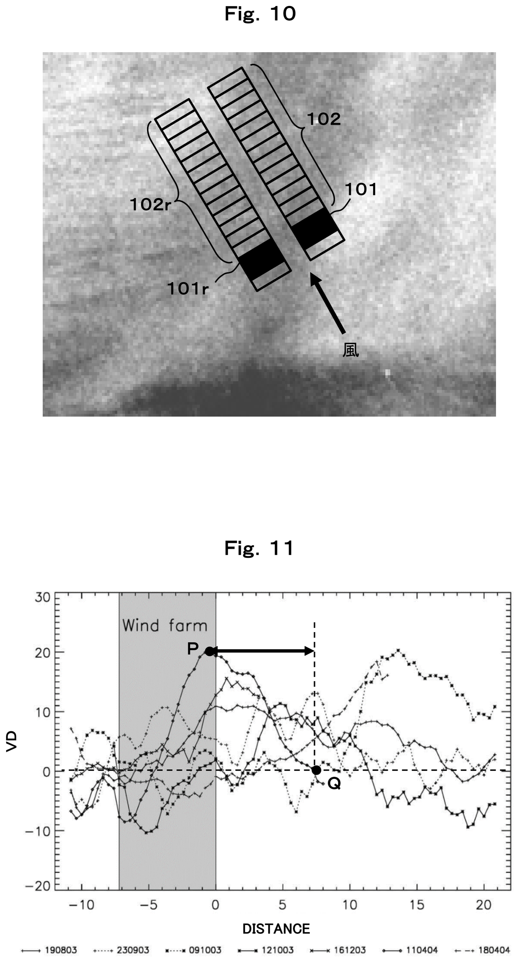

NPL 1 discloses a method for evaluating the wake influence length, which is an index indicating the range behind the turbine of a wind power plant that is affected by wakes. That is, as shown in FIG. 10, a technique is presented for calculating the wake influence length by setting a transect 102 parallel to the wake direction downwind of an offshore wind farm 101 and evaluating the reduction in wind speed caused by the turbines. The transect 102 indicates a region divided by black squares as shown in the diagram, and the average wind speed deficit VD within each divided region is evaluated.

The wind speed deficit VD indicates the degree to which the wind speed at the transect 102 corresponding to the wind farm 101 is lower than the wind speed within a reference transect 102r corresponding to a reference wind farm 101r present in parallel, and is calculated using the following Equation. Here, $U_{wake}$ is the wind force distribution after passing through the turbine group, and $U_{freestram}$ is the parallel reference wind speed distribution.

$$VD = (U_{freestram} - U_{wake})/U_{freestram}$$

FIG. 11 is a diagram showing the wind speed deficit VD calculated for the wind farm 101. The horizontal axis indicates the distance in the wake direction, and the vertical axis indicates the wind speed deficit VD. As shown in FIG. 11, the wake influence length L is evaluated as a distance in the wake direction to a point Q where the wind speed deficit VD becomes zero, with a point P where the wind speed deficit VD is maximized as a reference point for distance.

Citation List

Patent Literature

NPL 1: "Wake effects of large offshore wind power plants identified from satellite SAR" <URL: https://doi.org/10.1016/j.rse.2005.07.009>, Remote Sensing of Environment, Volume 98, Issues 2-3, 15 October 2005, Pages 251-268

Summary of Invention

Technical Problem

The technique described in NPL 1 is a rule-based method in which the transect 102 is provided for evaluation, and has the following problems. That is, since only the wind speed changes in the transect are observed, global characteristics or patterns are not evaluated, and accordingly, the method is susceptible to noise caused by winds other than wakes. In addition, a reference transect is required, and the evaluation results depend heavily on its installation location. In addition, since the transect is provided in a straight line, it is not possible to evaluate wakes that are not straight.

The invention has been made to solve such problems, and it is an object of the invention to enable wake evaluation using a novel method different from that described in NPL 1.

Solution to Problem

In order to solve the aforementioned problems, in the invention, image data observed using a synthetic aperture radar is analyzed using a machine learning model and one or more regions of the wakes (hereinafter, referred to as wake regions) included in the image data are detected, position information of each wake regions detected as described above is specified based on geographic information of an observation area measured by a satellite provided with the synthetic aperture radar, and the wake region detected by the image analysis is associated with the wind power plant at the corresponding location based on the specified position information of the wake region and position information of the wind power plant specified in advance.

Advantageous Effects of Invention

According to the invention configured as described above, by using a novel analysis method that is executed by applying image data observed using a synthetic aperture radar to a machine learning model, it is possible to evaluate wakes generated around a wind power plant without providing a transect.

Brief Description of Drawings

    [FIG. 1] FIG. 1 is a diagram showing an example of the network configuration of an analysis system to which a wake evaluation apparatus according to the present embodiment is applied.
    [FIG. 2] FIG. 2 is a block diagram showing an example of the functional configuration of the wake evaluation apparatus according to the present embodiment.
    [FIG. 3] FIG. 3 is a diagram showing an example of a wake region detected by a wake region detection unit of the present embodiment.
    [FIG. 4] FIG. 4 is a flowchart showing an example of the operation of the wake evaluation apparatus according to the present embodiment.
    [FIG. 5] FIG. 5 is a block diagram showing another example of the functional configuration of the wake evaluation apparatus according to the present embodiment.
    [FIG. 6] FIG. 6 is a block diagram showing another example of the functional configuration of the wake evaluation apparatus according to the present embodiment.
    [FIG. 7] FIG. 7 is a diagram showing the length in the longitudinal direction of a wake region detected on an SAR image by the wake region detection unit of the present embodiment.
    [FIG. 8] FIG. 8 is a block diagram showing another example of the functional configuration of the wake evaluation apparatus according to the present embodiment.
    [FIG. 9] FIG. 9 is a block diagram showing another example of the functional configuration of the wake evaluation apparatus according to the present embodiment.
    [FIG. 10] FIG. 10 is a diagram for explaining a conventional technique for evaluating a wake influence length.
    [FIG. 11] FIG. 11 is a diagram showing a wind speed deficit calculated by the conventional technique.

Description of Embodiments

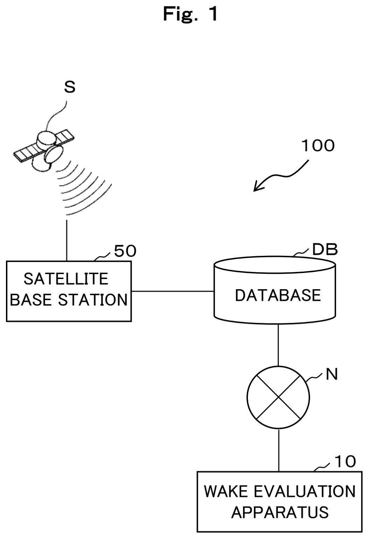

Hereinafter, an embodiment of the invention will be described with reference to the diagrams. FIG. 1 is a diagram showing an example of the network configuration of an analysis system 100 to which a wake evaluation apparatus according to the present embodiment is applied. The analysis system 100 includes a satellite base station 50 that receives satellite data from a satellite S flying in a satellite orbit in space, a database DB in which the satellite data is recorded, and a wake evaluation apparatus 10 that analyzes the satellite data.

The satellite S includes a satellite data acquisition unit (including, for example, an optical sensor or a synthetic aperture radar (SAR), and transmits satellite data acquired by the satellite data acquisition unit to the satellite base station 50. The satellite data includes not only image data (Raw data) of the sea surface observed using the SAR, but also image metadata and satellite metadata that are measured by the satellite and associated with the image data.

The image metadata includes geographic information of the observation area (for example, coordinate information indicating the latitude and longitude of each pixel position on an image captured by the SAR). In addition, the satellite metadata includes information such as satellite position, satellite speed, satellite movement direction, satellite time, scene center date and time, scene start date and time, scene end date and time, off-nadir angle, radar irradiation direction, radar incidence angle at each measurement data point (each pixel position in the SAR image), satellite orbit direction (northward orbit: Ascending and southward orbit: Descending), and observation direction (left and right).

The satellite base station 50 receives satellite data from the satellite S and records the received satellite data in the database DB. The database DB is connected to a communication network N such as the Internet. The wake evaluation apparatus 10 acquires satellite data stored in the database DB through the communication network N, and performs processing related to the evaluation of wakes generated around a wind power plant using the satellite data.

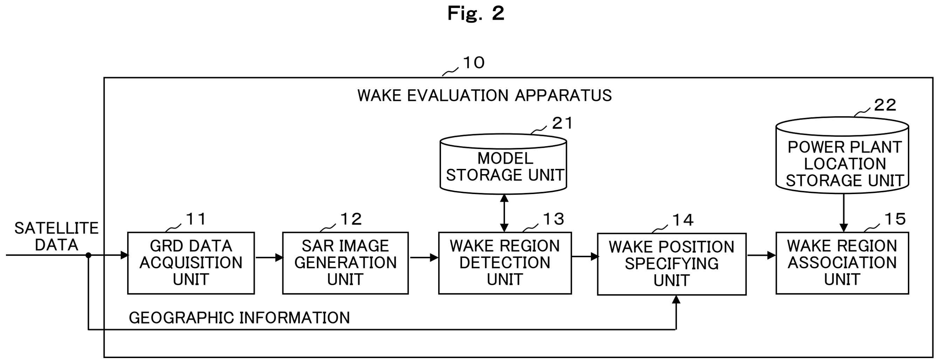

FIG. 2 is a block diagram showing an example of the functional configuration of the wake evaluation apparatus 10 according to the present embodiment. As shown in FIG. 2, the wake evaluation apparatus 10 according to the present embodiment includes, as functional components, a GRD data acquisition unit 11, an SAR image generation unit 12, a wake region detection unit 13, a wake position specifying unit 14, and a wake region association unit 15. In addition, the wake evaluation apparatus 10 according to the present embodiment includes, as storage media, a model storage unit 21 and a power plant location storage unit 22.

The functional blocks 11 to 15 can be implemented by any of hardware, a DSP (Digital Signal Processor), and software. For example, the functional blocks 11 to 15 are realized by executing a program stored in a storage medium, such as a RAM, a ROM, a hard disk, or a semiconductor memory, under the control of a microcomputer including a CPU, a RAM, a ROM, and the like. Instead of or in addition to the CPU, a GPU (Graphics Processing Unit), an FPGA (Field Programmable Gate Array), an ASIC (Application Specific Integrated Circuit), a DSP, and the like may be used.

Note that the physical configuration described herein is merely an example, and does not necessarily have to be an independent configuration. For example, the wake evaluation apparatus 10 may include an LSI (Large-Scale Integration) in which a CPU and a RAM and/or a ROM are integrated. In addition, in the present embodiment, a case will be described in which the wake evaluation apparatus 10 is implemented by a single computer, but the wake evaluation apparatus 10 may be realized by combining a plurality of computers.

The GRD data acquisition unit 11 acquires GRD (Grand Range Detected) data by processing the satellite data recorded in the database DB shown in FIG. 1. The GRD data is image data that is constructed by extracting intensity information of reflected signals from each position on the sea surface from the satellite data acquired by the SAR and projecting the information onto the sea surface. When generating the GRD data, multilook processing for noise reduction may be performed.

Note that, although an example of acquiring GRD data is shown herein, SLC (Single Look Complex) data may also be acquired. The SLC data includes not only sea surface reflection intensity information that can be recognized as an image but also phase information. In the present embodiment, however, the phase information does not need to be used.

The SAR image generation unit 12 generates an SAR image by converting the GRD data acquired by the GRD data acquisition unit 11 into an 8-bit black-and-white image. In general, the dynamic range of the GRD data is 16 bits or more, and this is converted into 8-bit image data. Note that this conversion to 8-bit is performed to improve the efficiency of calculation processing, and it is not essential to perform conversion to 8-bit.

Here, when the wind power plant is within the field of view of the SAR image in the observation area, the reflection intensity at the wind power plant is usually stronger than the reflection intensity at other sea surface regions. Therefore, the maximum pixel value of the SAR image may be determined by excluding the top few percent of the reflection intensities. For example, when generating an 8-bit SAR image by excluding the top 5% of reflection intensities to determine the maximum value, the SAR image is generated by setting the reflection intensities of 0 to 95% to the pixel values of 0 to 255 and fixing all reflection intensities of 96% or higher to a pixel value of 255.

The wake region detection unit 13 analyzes the SAR image generated by the SAR image generation unit 12 (corresponding to "image data observed using a synthetic aperture radar" in the claims) using a machine learning model and detects one or more wake regions included in the SAR image. The machine learning model is a model that has been trained by machine learning in advance using a plurality of SAR images as training data (hereinafter, referred to as a wake region detection model), and is stored in the model storage unit 21. In comparison with a technique described in Non-Patent Document 1, which specifies wake regions by comparison with a reference transect, this enables more robust detection of wake regions.

The machine learning of the wake region detection model is performed, for example, as follows. That is, a plurality of SAR images generated by the same processing as that of the GRD data acquisition unit 11 and the SAR image generation unit 12 are visually checked by a person, and annotation is performed for regions where wakes are generated. This is, for example, an annotation based on instance segmentation. That is, instead of assigning a rectangular box to surround a wake region visually confirmed in the SAR image, annotation is performed by masking the confirmed wake region along its shape.

Since wakes at a wind power plant are generated by a plurality of turbines that are regularly installed, the wakes exhibit distinctive patterns on SAR images. Therefore, the pattern specific to the wake region can be visually distinguished from the surrounding patterns, making it possible to identify and annotate the wake region.

A wake is generated when wind blows toward a wind power plant and the wind energy is reduced or disturbed by the turbines of the wind power plant. For this reason, a wake region is not necessarily linear, but may be curved. In the present embodiment, since annotation is performed by visually inspecting the SAR image, it is possible to flexibly accommodate the shape of the wake region unlike the case where a linear transect is provided as shown in NPL 1.

By annotating a plurality of SAR images as described above, a dataset to be used in machine learning is generated. Then, the data set is divided into training data and validation data, and machine learning of the wake region detection model is performed using the training data, while the detection accuracy of the model is checked using the validation data. The wake region detection model can be generated by deep learning, for example, in the form of a Mask R-CNN. Note that the form of the model to be used is not limited to this.

The wake region detection unit 13 inputs the SAR image generated by the SAR image generation unit 12 to the wake region detection model generated as described above and stored in the model storage unit 21, thereby detecting one or more wake regions from the SAR image. At this time, the wake region detection model may detect one or more candidate wake regions and calculate a confidence level indicating the likelihood that the candidate is a wake region, and may output only candidate regions whose confidence levels exceed a predetermined threshold value as correct wake regions.

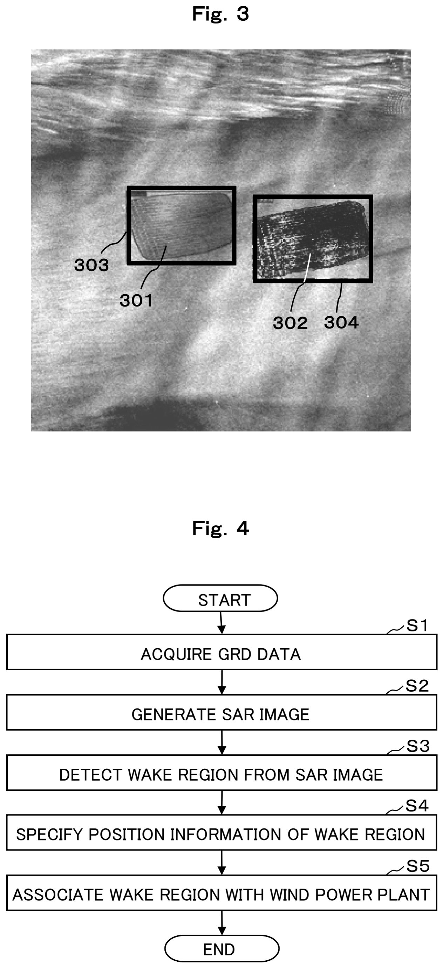

FIG. 3 is a diagram showing an example of a wake region detected by the wake region detection unit 13. In the example shown in FIG. 3, two wake regions 301 and 302 are detected from the SAR image. As shown in FIG. 3, the wake region detection unit 13 may output an image to a display or the like in a state in which the detected wake regions 301 and 302 are visualized by applying masks to the detected wake regions 301 and 302 along their respective shapes. Note that signs 303 and 304 will be described later.

The wake position specifying unit 14 specifies the position information of the wake region detected by the wake region detection unit 13 based on the geographic information of the satellite observation area (coordinate information indicating the latitude and longitude corresponding to each pixel position of the SAR image) recorded as image metadata in the satellite data acquired from the database DB. For example, the wake position specifying unit 14 specifies the latitude and longitude of each pixel position included in the wake region. Alternatively, the latitude and longitude of each pixel position included on the edge defining the outline of the wake region may be specified. Alternatively, the latitude and longitude of the center point of the wake region may be specified.

The wake region association unit 15 associates the wake regions detected by the wake region detection unit 13 with the wind power plant based on the position information of the wake region specified by the wake position specifying unit 14 and the position information of the wind power plant that has been specified in advance. The position information (latitude and longitude information) of the wind power plant is stored in advance in the power plant location storage unit 22.

For example, the wake region association unit 15 acquires the position information of a wind power plant specified by the user from among the pieces of position information of a plurality of wind power plants stored in the power plant location storage unit 22. Then, based on the acquired position information of the specific wind power plant and the position information of the wake region specified by the wake position specifying unit 14, the wake region detected by the wake region detection unit 13 is associated with the specific wind power plant. The user can specify any number of arbitrary wind power plants through a predetermined operation interface displayed on a display provided in the wake evaluation apparatus 10.

Here, the wake region association unit 15 specifies, based on the relative positional relationship between the wind power plant whose position information is stored in the power plant location storage unit 22 and the wake region whose position information is specified by the wake position specifying unit 14, a wake region whose relative position with respect to a specific wind power plant is sufficiently close as a wake region originating from the wind power plant.

For example, as shown in FIG. 3, the wake region association unit 15 may output an image to a display or the like in a state in which the wake region originating from a specific wind power plant is visualized by surrounding the wake region associated with the specific wind power plant with a rectangular box. In FIG. 3, two wake regions 301 and 302 are associated with respective wind power plants, and rectangular boxes 303 and 304 surrounding the wake regions 301 and 302 are drawn. When the user specifies only one of the wind power plants, a box is drawn only for the wake region corresponding to the specified one wind power plant. Note that wake regions with no box may not be masked.

FIG. 4 is a flowchart showing an example of the operation of the wake evaluation apparatus 10 according to the present embodiment configured as described above. Note that, before starting the process of the flowchart shown in FIG. 4, the user operates a predetermined operation interface to specify any number of arbitrary wind power plants for which wake evaluation is to be performed.

First, the GRD data acquisition unit 11 acquires GRD data by processing the satellite data recorded in the database DB shown in FIG. 1 (step S1). Then, the SAR image generation unit 12 converts the GRD data acquired by the GRD data acquisition unit 11 into an 8-bit black-and-white SAR image (step S2).

Then, the wake region detection unit 13 detects one or more wake regions included in the SAR image by inputting the SAR image generated by the SAR image generation unit 12 to the wake region detection model stored in the model storage unit 21 (step S3). In addition, the wake position specifying unit 14 specifies the position information of the wake region detected by the wake region detection unit 13 based on the latitude and longitude information of the SAR image recorded as image metadata in the database DB (step S4).

Then, the wake region association unit 15 associates the wake region detected by the wake region detection unit 13 with the wind power plant specified by the user based on the position information of the wake region specified by the wake position specifying unit 14 and the position information of the wind power plant specified in advance (step S5). At this time, as shown in FIG. 3, the wake region association unit 15 may draw the wake regions 301 and 302 detected by the wake region detection unit 13 and the rectangular boxes 303 and 304 surrounding the wake regions 301 and 302 on the SAR image and display these on a display.

Note that the timing at which the user specifies the wind power plant is not limited to before starting the process of the flowchart shown in FIG. 4. For example, an operation interface may be displayed on the display after the processing of step S3 or step S4, and the user may specify any wind power plant at that timing. Alternatively, at the timing after performing the processing of step S5 for all wake regions detected by the wake region detection unit 13, the operation interface may be displayed on the display to specify any wind power plant, and only the wake region corresponding to the specified wind power plant may be visualized.

As described in detail above, in the present embodiment, the SAR image is analyzed using a wake region detection model trained by machine learning, such as deep learning, and one or more wake regions included in the SAR image are detected, the position information of each wake region is specified based on the geographic information of the observation area, and the wake region detected by the image analysis is associated with the wind power plant at the corresponding location based on the specified position information of the wake region and the position information of the wind power plant specified in advance.

According to the present embodiment configured as described above, by using the novel analysis method that is executed by applying the SAR image to the machine learning model, it is possible to detect wake regions generated around the wind power plant without setting up transects as in the technique described in NPL 1. This manner make it possible to solve the above-mentioned problems associated with the technique described in NPL 1. That is, wake regions can be detected without being affected by noise originating from surrounding winds other than wakes, and non-linear wake regions can also be detected.

In addition, since the position of the wake region detected from the SAR image by the wake region detection model and the location of the wind power plant present in the SAR image are associated based on geographic information, it is possible to check the positional relationship between the wake region and the wind power plant. Since it is possible to designate a specific wind power plant and associate its location with the wake region, the wake region corresponding to the specific wind power plant can be recognized so as to be distinguished from other wake regions even when a plurality of wake regions are detected in the SAR image.

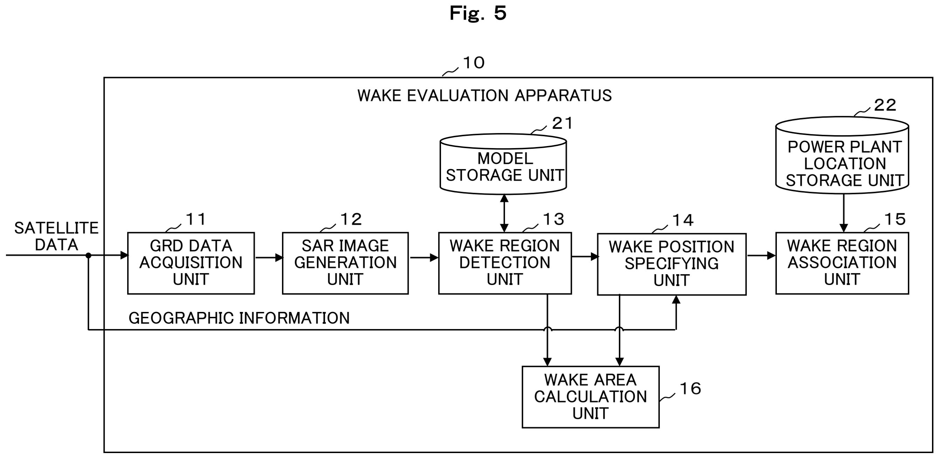

Note that, as shown in FIG. 5, a wake area calculation unit 16 may be further provided that calculates the actual area of the wake region detected by the wake region detection unit 13 based on the position information of the wake region specified by the wake position specifying unit 14 (the latitude and longitude information of each pixel position included in the wake region or the latitude and longitude of each pixel position included on the edge defining the outline of the wake region). This manner make it possible to calculate the actual area of the wake region, which could not be detected by the technique described in NPL 1 that uses transects.

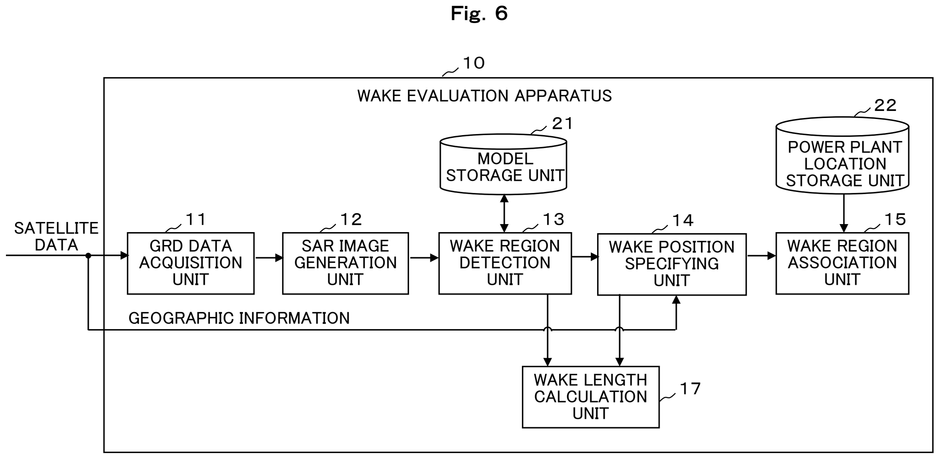

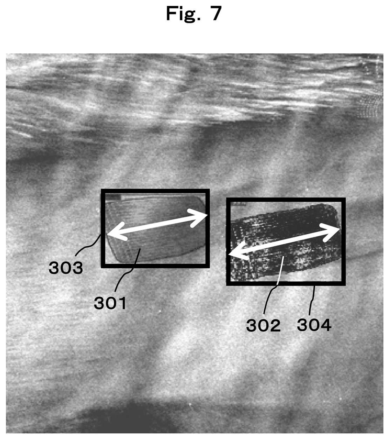

In addition, as shown in FIG. 6, a wake length calculation unit 17 may be further provided that calculates a wake influence length from the wake region detected by the wake region detection unit 13 based on the position information of the wake region specified by the wake position specifying unit 14. In the technique described in NPL 1, the wake influence length could not be checked without performing the analysis described in FIG. 11. In contrast, according to the present embodiment, as shown in FIG. 7, it is possible to easily calculate the wake influence length from the length in the longitudinal direction (indicated by the straight line with double arrows) of the wake region detected on the SAR image by the wake region detection unit 13 and the geographic information of the wake region. That is, the actual distance corresponding to the length in the longitudinal direction of the wake region can be calculated as the wake influence length based on the geographic information.

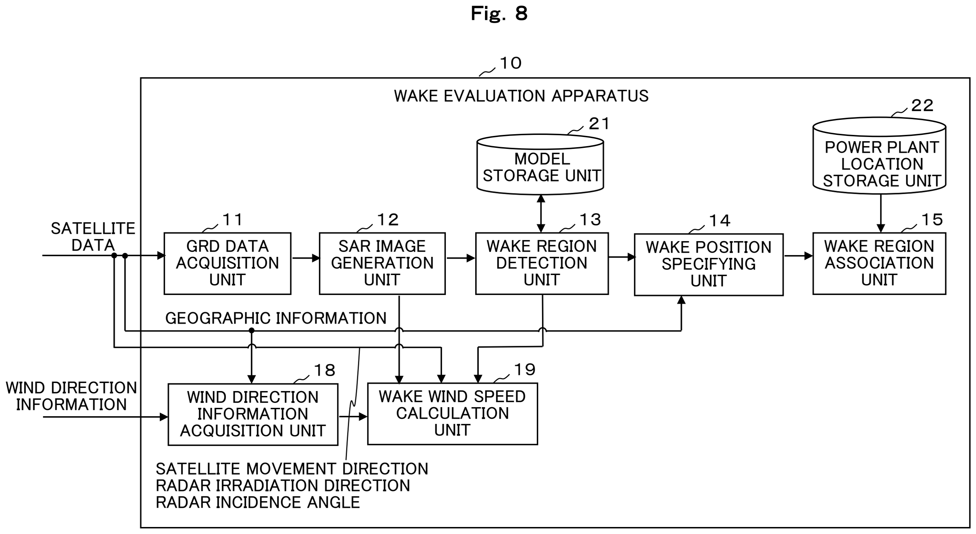

In addition, as shown in FIG. 8, a wind direction information acquisition unit 18 and a wake wind speed calculation unit 19 may be further provided to calculate the wind speed in the wake region detected by the wake region detection unit 13. The wind direction information acquisition unit 18 acquires wind direction information for the observation area from an external source based on the geographic information of the observation area included in the satellite data. As the external source, for example, ERA5 and Merra2 Dataset can be used.

The wake wind speed calculation unit 19 calculates the wind speed in the wake region detected by the wake region detection unit 13 based on the reflection intensity information (backscattering coefficient obtained by normalizing the reflection intensity) obtained from the SAR image generated by the SAR image generation unit 12; the satellite movement direction, radar irradiation direction, and radar incidence angle at each pixel position in the observation area that are included in the satellite metadata; and the wind direction information of the observation area acquired by the wind direction information acquisition unit 18. This wind speed calculation can be performed using known techniques.

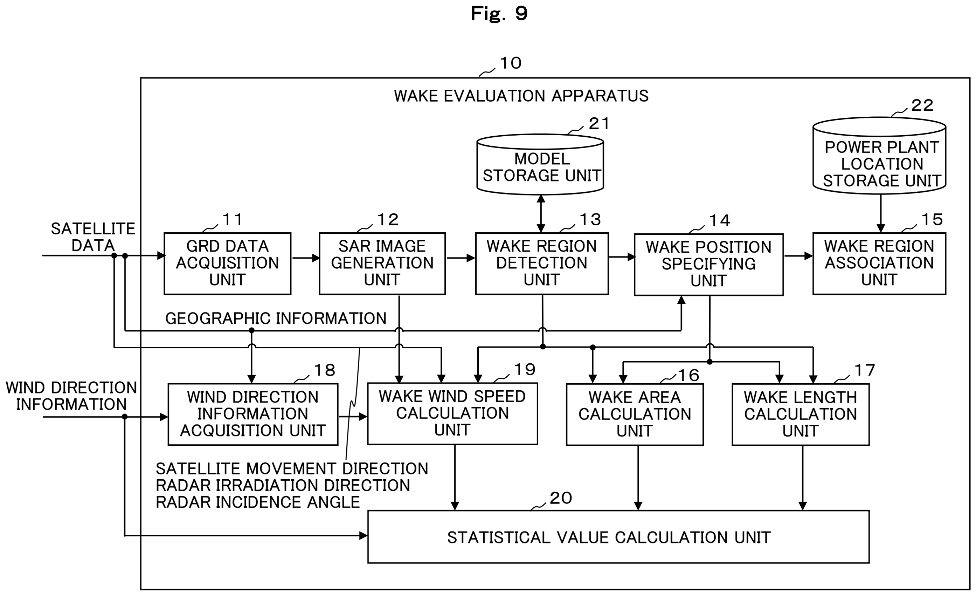

In addition, as shown in FIG. 9, a statistical value calculation unit 20 may be further provided. In FIG. 9, components denoted by the same signs as those in FIGS. 5, 6, and 8 have the same functions, and therefore, redundant explanations will be omitted herein. Since the wind power plant operates continuously and wind conditions are not constant over time, statistical information processing of the wake region conditions at various times is important.

Regarding a specific wind power plant, the statistical value calculation unit 20 calculates statistical values for the actual area of the wake region associated with the specific wind power plant, based on the actual area calculated by the wake area calculation unit 16 for the wake region whose position information has been associated by the wake region association unit 15 from each of a plurality of SAR images observed using the SAR at various times. For example, the average value, minimum value, and maximum value of the actual area of the wake region can be calculated as statistical values.

In addition, regarding a specific wind power plant, the statistical value calculation unit 20 calculates statistical values for the wake influence length of the wake region associated with the specific wind power plant, based on the wake influence length calculated by the wake length calculation unit 17 for the wake region whose position information has been associated by the wake region association unit 15 from each of a plurality of SAR images observed using the SAR at various times. For example, the average value, minimum value, and maximum value of the wake influence length can be calculated as statistical values.

In addition, regarding a specific wind power plant, the statistical value calculation unit 20 calculates statistical values for the wind speed of the wake region associated with the specific wind power plant, based on the wind speed calculated by the wake wind speed calculation unit 19 for the wake region whose position information has been associated by the wake region association unit 15 from each of a plurality of SAR images observed using the SAR at various times. For example, the average value, minimum value, and maximum value of the wind speed in the wake region can be calculated as statistical values.

In addition, a correlation analysis unit may be provided that analyzes the correlation between the wind direction acquired by the wind direction information acquisition unit 18 and the wake area or wake influence length.

In addition, an information acquisition unit that acquires information regarding the time or sunlight conditions of the observation area from an external source based on the geographic information of the observation area included in the image metadata may be provided to present the acquired information. This manner makes it possible to discuss the time dependency or sunlight conditions dependency of the wake area or wake influence length. In addition, the correlation between the time and the wake area or wake influence length and/or the correlation between the sunlight conditions and the wake area or wake influence length may be analyzed by the correlation analysis unit.

In addition, an information acquisition unit that acquires information regarding obstacles such as land, isolated islands, and buildings around the observation area from an external source based on the geographic information of the observation area included in the image metadata may be provided to present the acquired information. This manner make it possible to discuss the influence of obstacles such as surrounding land, isolated islands, and buildings on the detection of wake regions. When there is an obstacle around the observation area, the wind may be blocked by the obstacle to cause a wake, and the wake region may appear in the SAR image. By providing information regarding obstacles, it is possible to discuss the presence or absence of such phenomena.

Note that there may be an obstacle in the observation area. Therefore, an obstacle may be detected by analyzing the SAR image generated by the SAR image generation unit 12, and the presence or absence, location, and the like of the obstacle may be verified by comparison with the information acquired from the external source.

In addition, information regarding land, isolated islands, buildings, and the like around the wake region detected by the wake region detection unit 13 may be acquired from an external source based on the position information of the wake region specified by the wake position specifying unit 14 instead of the geographic information of the observation area included in the image metadata. This manner make it possible to discuss or analyze whether the wake region detected by the wake region detection unit 13 is caused by an obstacle around the wind power plant.

In addition, an information acquisition unit that acquires information regarding ocean currents, air temperature, and the like around the wake region from an external source based on the position information of the wake region specified by the wake position specifying unit 14 may be provided to present the acquired information. For example, by acquiring ocean current information in addition to acquiring wind direction information using the wind direction information acquisition unit 18, it is possible to distinguish between wakes and ocean current traces through visual inspection of the SAR image.

When there is an obstacle on the sea, traces similar to wakes may appear downstream of ocean currents, and these traces may be observed in the SAR image as patterns similar to wakes of wind speed reduction. On the other hand, the wind direction and the ocean current direction may be different. For this reason, by cross-referencing the wind direction information and the ocean current direction information, it is possible to distinguish between the two. That is, it is possible to distinguish between wake regions based on wind direction information and ocean current traces based on ocean current direction information.

In addition, by acquiring air temperature information, it is possible to perform, for example, a cause analysis of the wake area or wake influence length. The wake area or wake influence length depends on air temperature (more precisely, the air temperature gradient in the vertical direction). This is because the stability of the atmosphere varies depending on whether the potential temperature gradient in the vertical direction is positive or negative. Therefore, by acquiring information regarding air temperature around the wake region from an external source and providing the information, it is possible to perform a cause analysis of the wake area or wake influence length. In addition, the correlation between air temperature and the wake area or wake influence length may be analyzed by the correlation analysis unit.

In addition, the above embodiments are merely examples of specific implementations for carrying out the invention, and should not be interpreted as limiting the technical scope of the invention. That is, the invention can be implemented in various forms without departing from its gist or main features.

Reference Signs List

| 10: | wake evaluation apparatus |
| 11: | GRD data acquisition unit |
| 12: | SAR image generation unit |
| 13: | wake region detection unit |
| 14: | wake position specifying unit |
| 15: | wake region association unit |
| 16: | wake area calculation unit |
| 17: | wake length calculation unit |
| 18: | wind direction information acquisition unit |
| 19: | wake wind speed calculation unit |
| 20: | statistical value calculation unit |
| 21: | model storage unit |
| 22: | power plant location storage unit |

**Claims**

1. A wake evaluation apparatus for evaluating wakes generated around a wind power plant, comprising:

   a wake region detection unit that analyzes image data observed using a synthetic aperture radar using a machine learning model and detects one or more regions of the wakes included in the image data;
   a wake position specifying unit that specifies position information of each wake region detected by the wake region detection unit based on geographic information of an observation area measured by a satellite provided with the synthetic aperture radar; and
   a wake region association unit that associates the wake region detected by the wake region detection unit with the wind power plant based on the position information of the wake region specified by the wake position specifying unit and position information of the wind power plant specified in advance.

2. The wake evaluation apparatus according to claim 1, further comprising:
   a wake area calculation unit that calculates an actual area of the wake region detected by the wake region detection unit based on the position information of the wake region specified by the wake position specifying unit.

3. The wake evaluation apparatus according to claim 1, further comprising:
   a wake length calculation unit that calculates a wake influence length from the wake region detected by the wake region detection unit based on the position information of the wake region specified by the wake position specifying unit.

4. The wake evaluation apparatus according to claim 1, further comprising:
   a wake wind speed calculation unit that calculates a wind speed in the wake region detected by the wake region detection unit based on reflection intensity information obtained from the image data, satellite movement direction and radar irradiation direction measured by the satellite, a radar incidence angle with respect to a sea surface in the observation area, and wind direction information for the observation area acquired based on the geographic information of the observation area.

5. The wake evaluation apparatus according to claim 2, further comprising:
   a statistical value calculation unit that calculates, regarding a specific wind power plant, a statistical value related to the actual area of the wake region associated with the specific wind power plant, based on the actual area calculated by the wake area calculation unit for the wake region associated by the wake region association unit from each of a plurality of pieces of image data observed using the synthetic aperture radar.

6. The wake evaluation apparatus according to claim 3, further comprising:
   a statistical value calculation unit that calculates, regarding a specific wind power plant, a statistical value related to the wake influence length of the wake region associated with the specific wind power plant, based on the wake influence length calculated by the wake length calculation unit for the wake region associated by the wake region association unit from each of a plurality of pieces of image data observed using the synthetic aperture radar.

7. The wake evaluation apparatus according to claim 4, further comprising:
   a statistical value calculation unit that calculates, regarding a specific wind power plant, a statistical value related to the wind speed of the wake region associated with the specific wind power plant, based on the wind speed calculated by the wake wind speed calculation unit for the wake region associated by the wake region association unit from each of a plurality of pieces of image data observed using the synthetic aperture radar.

8. The wake evaluation apparatus according to claim 2 or 3, further comprising:
a correlation analysis unit that analyzes a correlation between wind direction information of the observation area acquired based on the geographic information of the observation area and the actual area of the wake region calculated by the wake area calculation unit according to claim 2 or the wake influence length calculated by the wake length calculation unit according to claim 3.

9. The wake evaluation apparatus according to claim 2 or 3, further comprising:
an information acquisition unit that acquires information regarding a time or sunlight conditions of the observation area from an external source based on the geographic information of the observation area.

10. The wake evaluation apparatus according to claim 2 or 3, further comprising:
an information acquisition unit that acquires information regarding an obstacle around the observation area or the wake region from an external source based on the geographic information of the observation area or the position information of the wake region specified by the wake position specifying unit.

11. The wake evaluation apparatus according to any one of claims 2 to 4, further comprising:
an information acquisition unit that acquires information regarding an ocean current or an air temperature around the wake region from an external source based on the position information of the wake region specified by the wake position specifying unit.

12. A wake evaluation method for evaluating wakes generated around a wind power plant, comprising:

a first step in which a wake region detection unit of a wake evaluation apparatus analyzes image data observed using a synthetic aperture radar using a machine learning model and detects one or more regions of the wakes included in the image data;
a second step in which a wake position specifying unit of the wake evaluation apparatus specifies position information of each wake region detected by the wake region detection unit based on geographic information of an observation area measured by a satellite provided with the synthetic aperture radar; and
a third step in which a wake region association unit of the wake evaluation apparatus associates the wake region detected by the wake region detection unit with the wind power plant based on the position information of the wake region specified by the wake position specifying unit and position information of the wind power plant specified in advance.

# Fig. 1

**Fig. 2**

WAKE EVALUATION APPARATUS ～10

SATELLITE DATA →

GRD DATA ACQUISITION UNIT ～11

SAR IMAGE GENERATION UNIT ～12

WAKE REGION DETECTION UNIT ～13

MODEL STORAGE UNIT ～21

WAKE POSITION SPECIFYING UNIT ～14

GEOGRAPHIC INFORMATION

WAKE REGION ASSOCIATION UNIT ～15

POWER PLANT LOCATION STORAGE UNIT ～22

EP 4 726 208 A1

**Fig. 3**

**Fig. 4**

```
START
  │
  ▼                                          S1
ACQUIRE GRD DATA
  │
  ▼                                          S2
GENERATE SAR IMAGE
  │
  ▼                                          S3
DETECT WAKE REGION FROM SAR IMAGE
  │
  ▼                                          S4
SPECIFY POSITION INFORMATION OF WAKE REGION
  │
  ▼                                          S5
ASSOCIATE WAKE REGION WITH WIND POWER PLANT
  │
  ▼
END
```

**Fig. 5**

WAKE EVALUATION APPARATUS 10

GRD DATA ACQUISITION UNIT 11

SAR IMAGE GENERATION UNIT 12

WAKE REGION DETECTION UNIT 13

MODEL STORAGE UNIT 21

WAKE POSITION SPECIFYING UNIT 14

WAKE AREA CALCULATION UNIT 16

WAKE REGION ASSOCIATION UNIT 15

POWER PLANT LOCATION STORAGE UNIT 22

SATELLITE DATA

GEOGRAPHIC INFORMATION

Fig. 6

Fig. 7

**Fig. 8**

WAKE EVALUATION APPARATUS ～10

SATELLITE DATA →

GRD DATA ACQUISITION UNIT ～11

↓

SAR IMAGE GENERATION UNIT ～12

↓

WAKE REGION DETECTION UNIT ～13

MODEL STORAGE UNIT ～21

↓

WAKE POSITION SPECIFYING UNIT ～14

↓

WAKE REGION ASSOCIATION UNIT ～15

POWER PLANT LOCATION STORAGE UNIT ～22

WIND DIRECTION INFORMATION →

WIND DIRECTION INFORMATION ACQUISITION UNIT ～18

GEOGRAPHIC INFORMATION

WAKE WIND SPEED CALCULATION UNIT ～19

SATELLITE MOVEMENT DIRECTION
RADAR IRRADIATION DIRECTION
RADAR INCIDENCE ANGLE

Fig. 9

WAKE EVALUATION APPARATUS — 10

21 — MODEL STORAGE UNIT

22 — POWER PLANT LOCATION STORAGE UNIT

SATELLITE DATA

11 — GRD DATA ACQUISITION UNIT

12 — SAR IMAGE GENERATION UNIT

13 — WAKE REGION DETECTION UNIT

14 — WAKE POSITION SPECIFYING UNIT

15 — WAKE REGION ASSOCIATION UNIT

GEOGRAPHIC INFORMATION

WIND DIRECTION INFORMATION

18 — WIND DIRECTION INFORMATION ACQUISITION UNIT

19 — WAKE WIND SPEED CALCULATION UNIT

16 — WAKE AREA CALCULATION UNIT

17 — WAKE LENGTH CALCULATION UNIT

SATELLITE MOVEMENT DIRECTION
RADAR IRRADIATION DIRECTION
RADAR INCIDENCE ANGLE

20 — STATISTICAL VALUE CALCULATION UNIT

17

# Fig. 10

# Fig. 11

## INTERNATIONAL SEARCH REPORT

| International application No. |
| --- |
| **PCT/JP2023/021381** |

### A. CLASSIFICATION OF SUBJECT MATTER

*F03D 17/00*(2016.01)i
FI:   F03D17/00

According to International Patent Classification (IPC) or to both national classification and IPC

### B. FIELDS SEARCHED

Minimum documentation searched (classification system followed by classification symbols)

F03D17/00, G01S7/00-7/42, G01S13/00-13/95

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | US 2018/0336408 A1 (INTERNATIONAL BUSINESS MACHINES CORPORATION) 22 November 2018 (2018-11-22) entire text, all drawings | 1-12 |
| A | JP 2017-102760 A (METRO WETHER CO., LTD.) 08 June 2017 (2017-06-08) entire text, all drawings | 1-12 |
| A | JP 2019-175142 A (IHI CORP.) 10 October 2019 (2019-10-10) entire text, all drawings | 1-12 |
| A | JP 2023-000897 A (SPACE SHIFT INC.) 04 January 2023 (2023-01-04) entire text, all drawings | 1-12 |

☐ Further documents are listed in the continuation of Box C.     ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **07 August 2023** | **15 August 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/021381**

| Patent document cited in search report | | | Publication date (day/month/year) | Patent family member(s) | | | Publication date (day/month/year) |
|---|---|---|---|---|---|---|---|
| US | 2018/0336408 | A1 | 22 November 2018 | (Family: none) | | | |
| JP | 2017-102760 | A | 08 June 2017 | (Family: none) | | | |
| JP | 2019-175142 | A | 10 October 2019 | (Family: none) | | | |
| JP | 2023-000897 | A | 04 January 2023 | WO | 2022/264473 | A1 | |
| | | | | EP | 4138036 | A1 | |
| | | | | entire text, all drawings | | | |
| | | | | CN | 115485742 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Wake effects of large offshore wind power plants identified from satellite SAR. *Remote Sensing of Environment*, 15 October 2005, vol. 98 (2-3), 251-268, https://doi.org/10.1016/j.rse.2005.07.009>